# EUROPEAN PATENT SPECIFICATION

(11) **EP 3 029 889 B1**
(45) Date of publication and mention of the grant of the patent: **25.01.2017**
(21) Application number: 15177543.4
(22) Date of filing: 20.07.2015
(51) Int. Cl.: H04L 12/58

(54) **METHOD FOR INSTANT MESSAGING AND DEVICE THEREOF**
VERFAHREN FÜR SOFORTNACHRICHTENDIENST UND VORRICHTUNG DAFÜR
PROCÉDÉ POUR UNE MESSAGERIE INSTANTANÉE ET DISPOSITIF ASSOCIÉ

(30) Priority: 03.12.2014 CN 201410727826
(43) Date of publication of application: 08.06.2016
(73) Proprietor: Xiaomi Inc., Beijing 100085 (CN)
(72) Inventor: LIN, Jinbin, 100085 Haidian District (CN); MA, Kun, 100085 Haidian District (CN); SHI, Dalong, 100085 Haidian District (CN)
(74) Representative: Robson, Aidan John

(56) References cited:
- EP-A1- 2 573 986
- US-A1- 2010 306 317

## Description

### TECHNICAL FIELD

The present disclosure generally relates to the field of communications, and more particularly, to a method for instant messaging and a device thereof.

### BACKGROUND

In chat software (or messager), a group is a tool for multi-user chatting and messaging. After creating a group, a group advocate may invite friends or like-minded people to chat in the group. Messages sent from a member in the group may be received by all other members in the group. Thus it is convenient and efficient for multi-user chatting. However, with popularity of chat software and unceasing development of groups, such a demand appears: a member sends a message in a group, but the member merely hopes a part of members instead of all other members in the group to receive this message.

Regarding the above demand, a common method at present is to create a new group or create a new topic in the existing group, and invite the part of anticipating members to the new group or the new topic, thus achieving group chat among this part of members. However, it is cumbersome and complex in operation because this method needs creation of a new group or a new topic followed by invitation of members expected in the new group or the new topic one by one. Furthermore, the group newly created may become a redundant group if it is not used any more, thus causing waste of resources.

Once such system is described in US 2010/0306317. The system of this document enables real-time directory groups to be formed, enables users to subscribe to those groups, and enables the users of the groups to be informed when there is new incoming content to the group. The user can decide whether to access the new content, and whether they wish to reply. The groups are managed by a group management server. The users can unsubscribe from the group if they wish to stop being informed of new incoming content.

### SUMMARY

On this account, the present disclosure provides a method for instant messaging and a device thereof according to the claims so as to reduce operation complexity in instant messaging with partial members in a group and to avoid waste of resources.

According to the first aspect of the embodiments of the present disclosure, there is provided a method for instant messaging, applied to a terminal, including:
sending a new message prompt message within a group when a user sends a new message in the group, the new message prompt message being configured to prompt all members in the group that a new unread message exists in the group;
receiving a read request configured to request reading of the new message sent from a terminal of any member in the group, the read request being initiated by the member by means of the terminal according to the new message prompt message on a group chat interface; and
choosing the read request according to a predefined rule so as to determine whether to allow the terminal of the member to display the new message.

Optionally, the step of choosing the read request according to a predefined rule so as to determine whether to allow the terminal of the member to display the new message includes:
determining whether to allow the terminal of the member to display the new message according to a locally choosing;
sending the new message to the terminal of the member when it is determined to allow the terminal of the member to display the new message; and
sending a rejection message to the terminal of the member when it is determined to disallow the terminal of the member to display the new message.

Optionally, the step of determining whether to allow the terminal of the member to display the new message according to a local screen includes:
inquiring whether the user allows the terminal of the member to display the new message; or searching a preset whitelist or blacklist to determine whether to allow the terminal of the member to display the new message.

Optionally, the step of sending a new message prompt message in a group includes:
sending a control message in a preset format in the group, the control message being configured to instruct a server to send a new message prompt message to a current group chat interface of each member in the group except the user.

According to the second aspect of the embodiment of the present disclosure, there is provided a method for instant messaging, applied to a server, including:
receiving a new message prompt message sent from a terminal of a first member in a group, forwarding the new message prompt message to the group, the new message prompt message being configured to prompt all members in the group that a new unread message exists in the group;
receiving a read request for reading the new message which is initiated by a terminal of a second member in the group according to the new message prompt message on a group chat interface and forwarding the read request to the terminal of the first member; and
receiving a message sent from the terminal of the first member after it is determined whether to allow the terminal of the second member to display the new message and forwarding the message to the terminal of the second member.

Optionally, the step of receiving a message sent from the terminal of the first member after it is determined whether to allow the terminal of the second member to display the new message and forwarding the message to the terminal of the second member includes:
receiving the new message sent from the terminal of the first member after it is determined to allow the terminal of the second member to display the new message and forwarding the new message to the terminal of the second member; or
receiving a rejection message sent from the terminal of the first member after it is determined to disallow the terminal of the second member to display the new message and forwarding the rejection message to the terminal of the second member.

Optionally, the step of receiving a new message prompt message sent from a terminal of a first member in a group and forwarding the new message prompt message to the group includes:
receiving a control message in a preset format sent from the terminal of the first member in the group, and sending the control message as a new message prompt message to a current group chat interface of each member in the group except the first member.

According to the third aspect of the embodiments of the present disclosure, there is provided a terminal device for instant messaging, including:
a message prompt module, configured to send a new message prompt message in a group when a user sends a new message in the group, the new message prompt message being configured to prompt all members in the group that a new unread message exists in the group;
a read request receiving module, configured to receive a read request configured to request reading of the new message sent from a terminal of any member in the group, the read request being initiated by the member by means of the terminal according to the new message prompt message on a group chat interface; and
a determination module, configured to choose the read request according to a predefined rule so as to determine whether to allow the terminal of the member to display the new message.

Optionally, the determination module includes:
a determination submodule, configured to determine whether to allow the terminal of the member to display the new message according to a local screen;
a first sending submodule, configured to send the new message to the terminal of the member when the determination submodule determines to allow the terminal of the member to display the new message; and
a second sending submodule, configured to send a rejection message to the terminal of the member when the determination submodule determines to disallow the terminal of the member to display the new message.

Optionally, the determination submodule is configured to:
inquire whether the user allows the terminal of the member to display the new message; or search a preset whitelist or blacklist to determine whether to allow the terminal of the member to display the new message.

Optionally, the message prompt module includes:
a message prompt submodule, configured to send a control message with a preset format in a group when a user sends a new message in the group, the control message being configured to instruct a server to send a new message prompt message to a current group chat interface of each member in the group except the user, and the new message prompt message being configured to prompt all members in the group that a new unread message exists in the group.

According to the fourth aspect of the embodiments of the present disclosure, there is provided a server device for instant messaging, including:
a message prompt module, configured to receive a new message prompt message sent from a terminal of a first member in a group and forward the new message prompt message to the group, the new message prompt message being configured to prompt all members in the group that a new unread message exists in the group;
a read request forwarding module, configured to receive a read request for reading the new message which is initiated by a terminal of a second member in the group according to the new message prompt message on a group chat interface and forward the read request to the terminal of the first member; and
a message forwarding module, configured to receive a message sent from the terminal of the first member after it is determined whether to allow the terminal of the second member to display the new message and forward the message to the terminal of the second member.

Optionally, the message forwarding module includes:
a first forwarding submodule, configured to receive the new message sent from the terminal of the first member after it is determined to allow the terminal of the second member to display the new message and forward the new message to the terminal of the second member; or
a second forwarding submodule, configured to receive a rejection message sent from the terminal of the first member after it is determined to disallow the terminal of the second member to display the new message and forward the rejection message to the terminal of the second member.

Optionally, the message prompt module includes:
a message prompt submodule, configured to receive a control message with a preset format sent from a terminal of a first member in the group and send the control message as a new message prompt message to a current group chat interface of each member in the group except the first member, and the new message prompt message being configured to prompt all members in the group that a new unread message exists in the group.

According to the fifth aspect of the embodiments of the disclosure, there is provided a terminal device for instant messaging, including:
a processor and a memory configured to store instructions executable by the processor;
wherein, the processor is configured to:
send a new message prompt message in a group when a user sends a new message in the group, the new message prompt message being configured to prompt all members in the group that a new unread message exists in the group;
receive a read request configured to request reading of the new message sent from a terminal of any member in the group, the read request being initiated by the member by means of the terminal according to the new message prompt message on a group chat interface; and
choose the read request according to a predefined rule so as to determine whether to allow the terminal of the member to display the new message.

According to the sixth aspect of the embodiments of the disclosure, there is provided a server device for instant messaging, including:
a processor and a memory configured to store instructions executable by the processor;
wherein, the processor is configured to:
receive a new message prompt message sent from a terminal of a first member in a group, forwarding the new message prompt message to the group, the new message prompt message being configured to prompt all members in the group that a new unread message exists in the group;
receive a read request for reading the new message which is initiated by a terminal of a second member in the group according to the new message prompt message on a group chat interface and forward the read request to the terminal of the first member; and
receive a message sent from the terminal of the first member after it is determined whether to allow the terminal of the second member to display the new message and forward the message to the terminal of the second member.

The technical solution provided in the embodiments of the disclosure may include following beneficial effects: by sending a new message prompt message in a group to prompt all members in the group that a new unread message exists in the group, receiving a read request initiated by a terminal of any member in the group according to the new message prompt message on a group chat interface and choosing the read request according to a predefined rule so as to determine whether to allow the terminal of the member to display the new message, selective group chat is achieved in the group, the read permission of each member in the group may be accurately controlled, and group chat with partial members may be achieved without newly establishing a group or a topic, thus guaranteeing privacy and security of messages, greatly reducing operation complexity, increasing enjoyment of group chat, and improving the active degree of group chat and user experience.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic scenario of instant messaging according to an exemplary embodiment.
Fig. 2 is a flow chart showing a method for instant messaging according to another exemplary embodiment.
Fig. 3 is a flow chart showing a method for instant messaging according to another exemplary embodiment.
Fig. 4 is a flow chart showing a method for instant messaging according to another exemplary embodiment.
Fig. 5 is a flow chart showing a method for instant messaging according to another exemplary embodiment.
Fig. 6 is a flow chart showing a method for instant messaging according to another exemplary embodiment.
Fig. 7 is a flow chart showing a method for instant messaging according to another exemplary embodiment.
Fig. 8 is a block diagram showing a device for instant messaging according to another exemplary embodiment.
Fig. 9 is a block diagram showing a device for instant messaging according to another exemplary embodiment.
Fig. 10 is a block diagram showing a device for instant messaging according to another exemplary embodiment.
Fig. 11 is a block diagram showing a device for instant messaging according to another exemplary embodiment.
Fig. 12 is a block diagram showing a device for instant messaging according to another exemplary embodiment.
Fig. 13 is a block diagram showing a device for instant messaging according to another exemplary embodiment.
Fig. 14 is a block diagram showing a device for instant messaging according to another exemplary embodiment.
Fig. 15 is a block diagram showing a device for instant messaging according to another exemplary embodiment.
Fig. 16 is a block diagram showing a device for instant messaging according to another exemplary embodiment.
Fig. 17 is a block diagram showing a device for instant messaging according to another exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

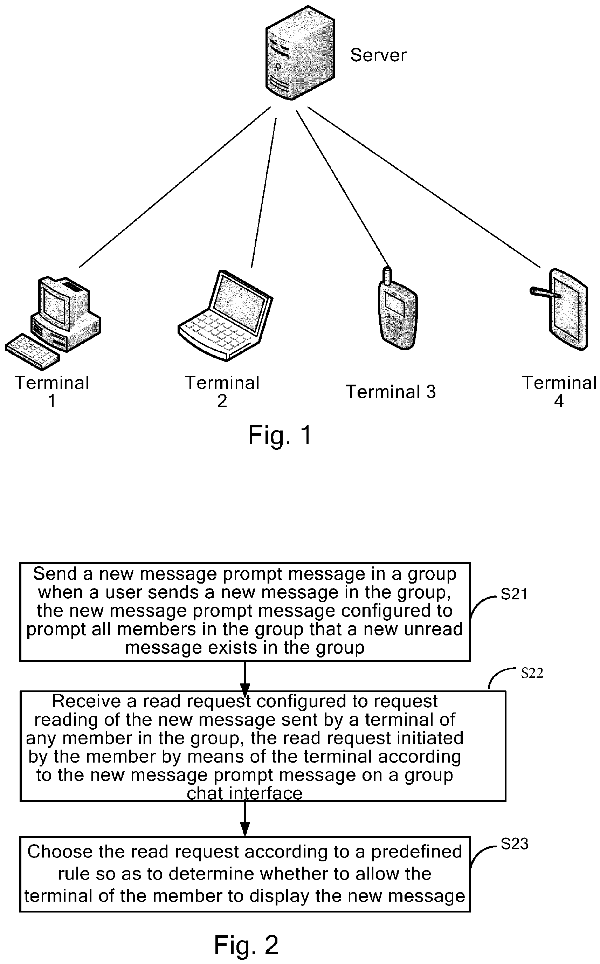

The embodiments of the present disclosure generally relate to a method for instant messaging and a device thereof mainly applied to a scenario of group chat (or group messaging). The scenario may include an architecture as shown in Fig. 1. Wherein, the architecture includes a server and a plurality of terminals, illustrated by four terminals in Fig. 1. These four terminals 1-4 respectively are: a computer, a portable laptop, a mobile phone and a tablet computer. Terminals in the present disclosure may be terminals of any type, which is not limited herein. The terminals and the server are installed with instant messaging software, and instant messaging is available by means of the instant messaging software. Users of four terminals in Fig. 1 are in the same group, and any one of these four users may initiate a group chat to communicate with other users. In the embodiments of the present disclosure, instant messaging among partial members in a group is achieved by means of the method for instant messaging and the device thereof. A description will be made in detail as below.

Fig. 2 is a flow chart showing a method for instant messaging according to another exemplary embodiment, and as shown in Fig.2, the method is applied to a terminal, including following steps.

In Step S21, a new message prompt message is sent in a group when a user sends a new message in the group, the new message prompt message being configured to prompt iall members in the group that a new unread message exists in the group.

Wherein, the new message prompt message may have multiple presentation forms, for example, an icon, a button or a link (or interlinkage) and the like displayed on a group chat interface, on which the present embodiment makes no specific restriction. A user may trigger sending of a read request by clicking the new message prompt message. It should be noted that the new message prompt message contains no substantive message content and the new message prompt message may be received by all other members in the group except the user (i.e. the local member).

In Step S22, it is received a read request configured to request reading of the new message sent from a terminal of any member in the group, the read request being initiated by the member by means of the terminal according to the new message prompt message on a group chat interface.

In Step S23, the read request is chosen (or screened) according to a predefined rule so as to determine whether to allow the terminal of the member to display the new message.

Wherein, the new message is a message to be locally sent from the user, including substantive content of the message, and the user does not hope all members in the group to receive the message. Therefore, a part of members in the group are selectively allowed to receive the message by means of the read request and by way of determination.

In the present embodiment, optionally, the step of choosing the read request according to a predefined rule so as to determine whether to allow the terminal of the member to display the new message may include:
determining whether to allow the terminal of the member to display the new message according to a locally choosing (or local screen);
sending the new message to the terminal of the member when it is determined to allow the terminal of the member to display the new message; and
sending a rejection message to the terminal of the member when it is determined to disallow the terminal of the member to display the new message.

In the present embodiment, optionally, the step of determining whether to allow the terminal of the member to display the new message according to a local screen may include:
inquiring whether the user allows the terminal of the member to display the new message; or searching a preset whitelist or blacklist to determine whether to allow the terminal of the member to display the new message.

In the present embodiment, optionally, the step of sending a new message prompt message in a group may include:
sending a control message in a preset format in the group, the control message being configured to instruct a server to send a new message prompt message to a current group chat interface of each member in the group except the user.

By achieving a selective group chat in the group with the foregoing steps, the above method provided in the present embodiment may accurately control the read permission of each member in the group and achieve group chatting with partial members (or some members) without newly establishing a group or a topic, thus guaranteeing privacy and security of messages, greatly reducing operation complexity, increasing enjoyment of group chat, and improving the active degree of group chat and user experience.

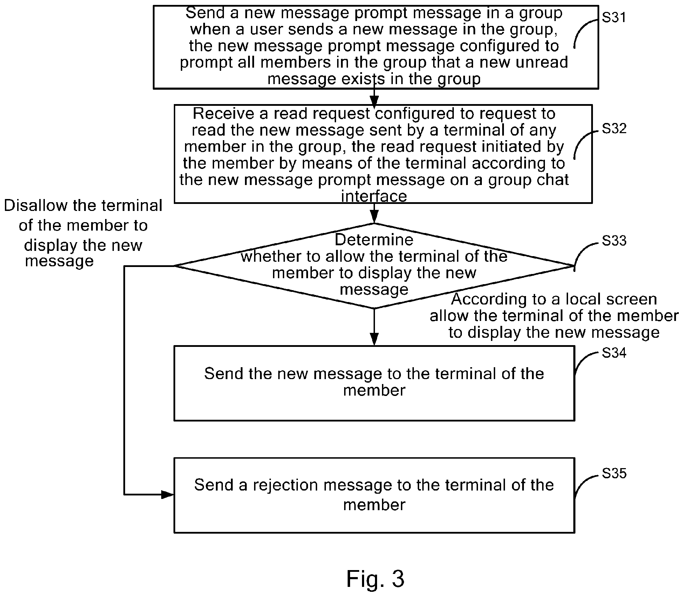

Fig. 3 is a flow chart showing a method for instant messaging according to another exemplary embodiment, and as shown in Fig.3, the method is applied to a terminal, including following steps.
In Step S31, a new message prompt message is sent in a group when a user sends a new message in the group, the new message prompt message being configured to prompt all members in the group that a new unread message exists in the group.
In Step S32, it is received a read request configured to request reading of the new message sent from a terminal of any member in the group, the read request being initiated by the member by means of the terminal according to the new message prompt message on a group chat interface.
In Step S33, it is determined whether to allow the terminal of the member to display the new message according to a locally choosing, and Step S34 is executed if it is determined to allow the terminal of the member to display the new message, or Step S35 is executed if it is determined to disallow the terminal of the member to display the new message.

Wherein, the Step S33 may include following substeps:
inquiring whether the user allows the terminal of the member to display the new message; or searching a preset whitelist or blacklist to determine whether to allow the terminal of the member to display the new message.

Wherein, the following mode may be adopted to achieve the step of inquiring whether the user allows the terminal of the member to display the new message: "the member XX requests to read the message" is displayed on the group chat interface, an "Agree" button and a "Disagree" button are provided to the user for choice; the terminal of the member is determined to allow to display the new message if the user clicks the "Agree" button, or the terminal of the member is determined to disallow to display the new message if the user clicks the "Disagree" button.

The whitelist is a list containing members who have permission to read a message. When the whitelist is looked up, a member who is listed in the whitelist has permission to read a message, and a member who is not listed in the whitelist has no permission to read a message.

The blacklist is a list containing members who have no permission to read a message. When the blacklist is looked up, a member who is listed in the blacklist has no permission to read a message, and a member who is not listed in the blacklist has permission to read a message.

In Step S34, the new message is sent to the terminal of the member, and the process ends.

The new message contains substantive content of the new message, and the user may look up the substantive content after receiving it.

In Step S35, the rejection message is sent to the terminal of the member, and the process ends.

Wherein, the rejection message sent is displayed on the group chat interface of the member who will not receive the new message, thus achieving accurate control of the read permission of members in the group, and achieving the goal of chatting with a part of members in the group.

By achieving a selective group chat in a group with the foregoing steps, the above method provided in the present embodiment may accurately control the read permission of each member in the group and achieve group chatting with partial members without newly establishing a group or a topic, thus guaranteeing privacy and security of messages, greatly reducing operation complexity, increasing enjoyment of group chat, and improving the active degree of group chat and user experience.

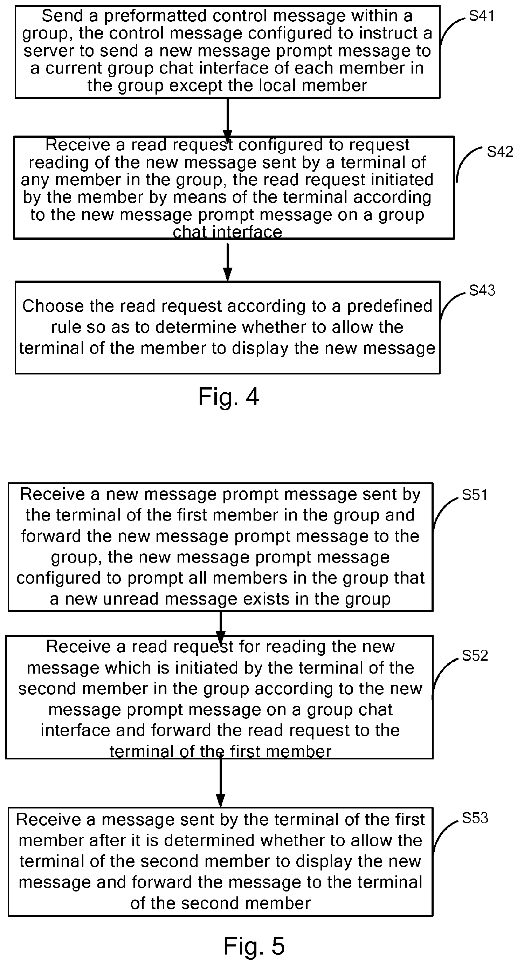

Fig. 4 is a flow chart showing a method for instant messaging according to another exemplary embodiment, and as shown in Fig. 4, the method is applied to a terminal, including following steps.

In Step S41, a control message in a preset format is sent in a group, the control message being configured to instruct a server to send a new message prompt message to a current group chat interface of each member in the group except the user, and the new message prompt message being configured to prompt all members in the group that a new unread message exists in the group.

Wherein, the sever may send the control message as a new message prompt message to the group. Optionally, the preset format of the control message may be that content is empty, i.e., containing no substantive content of the message, just achieving the goal of prompt and determination. It should be noted that the control message is really not the new message to be sent.

In Step S42, it is received a read request configured to request reading of the new message sent from a terminal of any member in the group, the read request being initiated by the member by means of the terminal according to the new message prompt message on a group chat interface.

In Step S43, the read request is chosen according to a predefined rule so as to determine whether to allow the terminal of the member to display the new message.

By achieving a selective group chat in a group with the foregoing steps, the above method provided in the present embodiment may accurately control the read permission of each member in the group and achieve group chatting with partial members without newly establishing a group or a topic, thus guaranteeing privacy and security of messages, greatly reducing operation complexity, increasing enjoyment of group chat, and improving the active degree of group chat and user experience.

Fig. 5 is a flow chart showing a method for instant messaging according to another exemplary embodiment, and as shown in Fig. 5, the method is applied to a server, including following steps.

In Step S51, it is received a new message prompt message sent from the terminal of the first member in the group and the new message prompt message is forwarded to the group, the new message prompt message being configured to prompt all members in the group that a new unread message exists in the group.

In Step S52, it is received a read request for reading the new message which is initiated by the terminal of the second member in the group according to the new message prompt message on a group chat interface and the read request is forwarded to the terminal of the first member.

Wherein, the second member may be any member except the first member in the group, which is not limited herein. The second member may click on the new message prompt message on the group chat interface of his/her own to trigger sending a read request to the first member, and the server may forward the read request to the first member.

In Step S53, it is received a message sent from the terminal of the first member after it is determined whether to allow the terminal of the second member to display the new message and the message is forwarded to the terminal of the second member.

In the present embodiment, optionally, the step of receiving a message sent from the terminal of the first member after it is determined whether to allow the terminal of the second member to display the new message and forwarding the message to the terminal of the second member may include:
receiving the new message sent from the terminal of the first member after it is determined to allow the terminal of the second member to display the new message and forwarding the new message to the terminal of the second member; or
receiving a rejection message sent from the terminal of the first member after it is determined to disallow the terminal of the second member to display the new message and forwarding the rejection message to the terminal of the second member.

In the present embodiment, optionally, the step of receiving a new message prompt message sent from a terminal of the first member in the group and forwarding the new message prompt message to the group may include:
receiving a control message in a preset format sent from the terminal of the first member in the group, and sending the control message as a new message prompt message to a current group chat interface of each member in the group except the first member. For example, the preset format may include a message with no content or a message with predetermined content such as "the read permission of the message is to be confirmed" and the like. The format of the control message may be predetermined by instant messaging software, on which the present embodiment makes no restriction.

By achieving a selective group chat in a group with the foregoing steps, the above method provided in the present embodiment may accurately control the read permission of each member in the group and achieve group chatting with partial members without newly establishing a group or a topic, thus guaranteeing privacy and security of messages, greatly reducing operation complexity, increasing enjoyment of group chat, and improving the active degree of group chat and user experience.

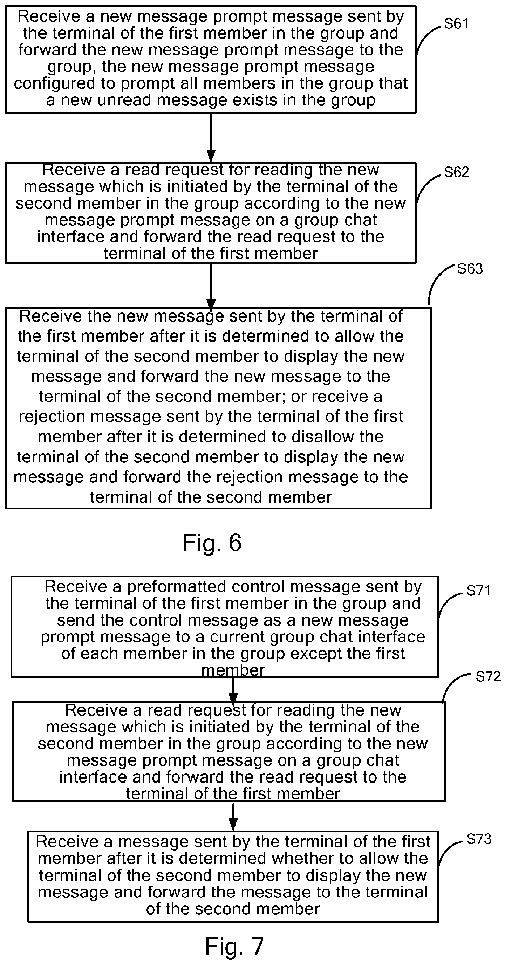

Fig. 6 is a flow chart showing a method for instant messaging according to another exemplary embodiment, and as shown in Fig. 6, the method is applied to a server, including following steps.
In Step S61, it is received a new message prompt message sent from the terminal of the first member in the group, and the new message prompt message is forwarded to the group, the new message prompt message being configured to prompt all members in the group that a new unread message exists in the group.
In Step S62, it is received a read request for reading the new message which is initiated by the terminal of the second member in the group according to the new message prompt message on a group chat interface, and the read request is forwarded to the terminal of the first member.
In Step S63, it is received the new message sent from the terminal of the first member after it is determined to allow the terminal of the second member to display the new message, and the new message is forwarded to the terminal of the second member; or it is received a rejection message sent from the terminal of the first member after it is determined to disallow the terminal of the second member to display the new message, and the rejection message is forwarded to the terminal of the second member.

Wherein, regarding each member sending a read request, the first member may control their read permissions according to their own needs by determining whether to allow or disallow the member to read the message, thus achieving the goal of group chatting with a part of members selected.

By achieving a selective group chat in a group with the foregoing steps, the above method provided in the present embodiment may accurately control the read permission of each member in the group and achieve group chatting with partial members without newly establishing a group or a topic, thus guaranteeing privacy and security of messages, greatly reducing operation complexity, increasing enjoyment of group chat, and improving the active degree of group chat and user experience.

Fig. 7 is a flow chart showing a method for instant messaging according to another exemplary embodiment, and as shown in Fig. 7, the method is applied to a server, including following steps.

In Step S71, it is received a control message in a preset format sent from the terminal of the first member in the group, and the control message is sent as a new message prompt message to a current group chat interface of each member in the group except the first member, the new message prompt message being configured to prompt all members in the group that a new unread message exists in the group.

Wherein, the new message prompt message may have multiple forms, for example, an icon shaped like an envelope, a button or a link and the like, on which the present embodiment makes no specific restriction.

In Step S72, it is received a read request for reading the new message which is initiated by the terminal of the second member in the group according to the new message prompt message on a group chat interface, and the read request is forwarded to the terminal of the first member.

In Step S73, it is received a message sent from the terminal of the first member after it is determined whether to allow the terminal of the second member to display the new message, and the message is forwarded to the terminal of the second member.

Wherein, a message sent from the first member may be the new message or a rejection message, which is forwarded by the server to the second member, thus achieving the control of the read permission given to the second member.

By achieving a selective group chat in a group with the foregoing steps, the above method provided in the present embodiment may accurately control the read permission of each member in the group and achieve group chatting with partial members without newly establishing a group or a topic, thus guaranteeing privacy and security of messages, greatly reducing operation complexity, increasing enjoyment of group chat, and improving the active degree of group chat and user experience.

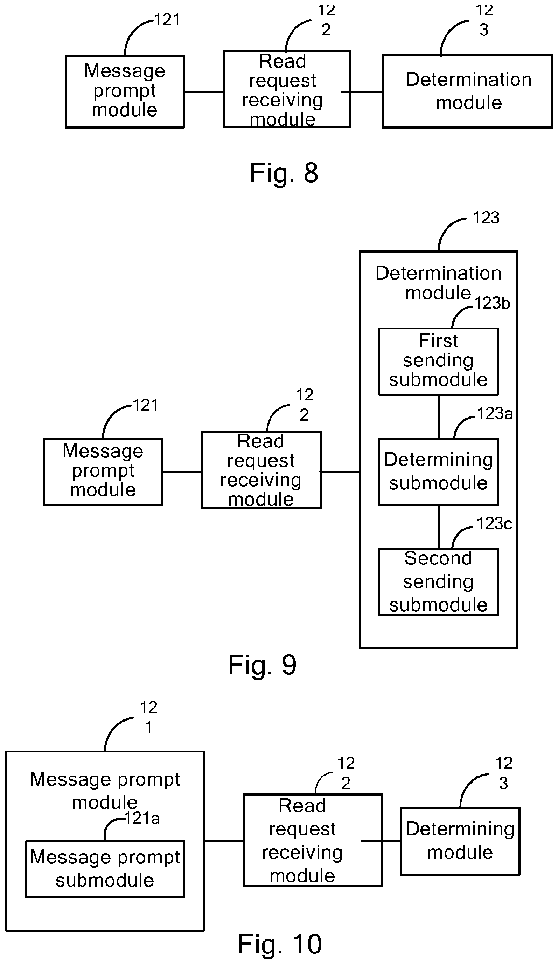

Fig. 8 is a block diagram showing a device for instant messaging according to another exemplary embodiment. Referring to Fig. 8, the device includes a message prompt module 121, a read request receiving module 122 and a determination module 123.

The message prompt module 121 is configured to send a new message prompt message in a group when a user sends a new message in the group, the new message prompt message being configured to prompt all members in the group that a new unread message exists in the group.

The read request receiving module 122 is configured to receive a read request configured to request reading of the new message sent from a terminal of any member in the group, the read request being initiated by the member by means of the terminal according to the new message prompt message on a group chat interface.

The determination module (or determining module) 123 is configured to choose (or screen) the read request according to a predefined rule so as to determine whether to allow the terminal of the member to display the new message.

Referring to Fig. 9, in the present embodiment, optionally, the determination module 123 may include: a determination submodule (or determining submodule) 123a, a first sending submodule 123b and a second sending submodule 123c.

The determination submodule 123a is configured to determine whether to allow the terminal of the member to display the new message according to a locally choosing (or local screen).

The first sending submodule 123b is configured to send the new message to the terminal of the member when the determination submodule determines to allow the terminal of the member to display the new message.

The second sending submodule 123c is configured to send a rejection message to the terminal of the member when the determination submodule determines to disallow the terminal of the member to display the new message.

In the present embodiment, optionally, the determination submodule 123a is configured to inquire whether the user allows the terminal of the member to display the new message, or search a preset whitelist or blacklist to determine whether to allow the terminal of the member to display the new message.

Referring to Fig. 10, in the present embodiment, optionally, the message prompt module 121 may include:

a message prompt submodule 121a, configured to send a control message in a preset format in a group when a user sends a new message in the group. The control message is configured to instruct a server to send a new message prompt message to a current group chat interface of each member in the group except the user. The new message prompt message is configured to prompt all members in the group that a new unread message exists in the group.

With regard to the device in the above embodiment, detailed description of specific modes for conducting operation of modules has been made in the embodiment related to the method, no detailed illustration will be made herein.

By achieving a selective group chat in a group, the foregoing device provided in the present embodiment may accurately control the read permission of each member in the group and achieve group chatting with partial members without newly establishing a group or a topic, thus guaranteeing privacy and security of messages, greatly reducing operation complexity, increasing enjoyment of group chat, and improving the active degree of group chat and user experience.

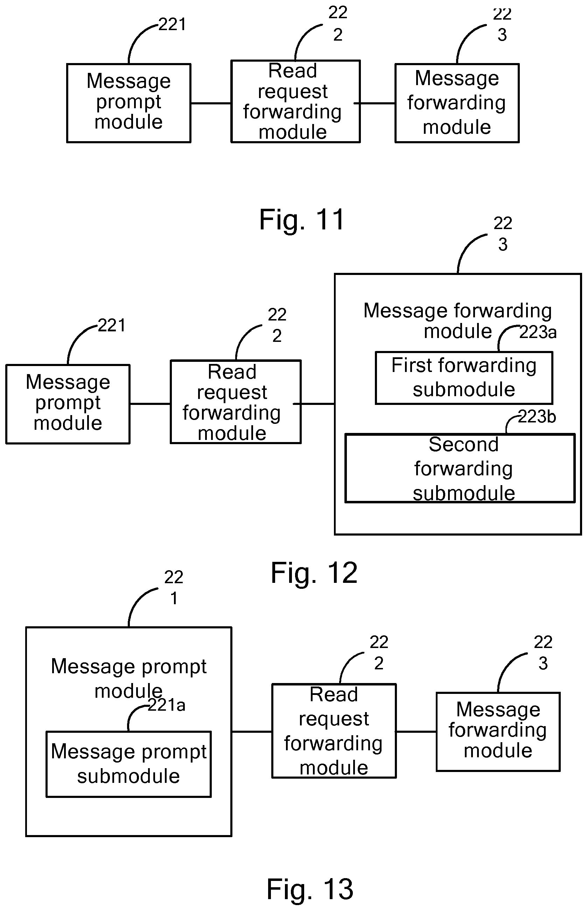

Fig. 11 is a block diagram showing a device for instant messaging according to another exemplary embodiment. Referring to Fig. 11, the device includes a message prompt module 221, a read request forwarding module 222 and a message forwarding module 223.

The message prompt module 221 is configured to receive a new message prompt message sent from the terminal of the first member in a group and forward the new message prompt message to the group, the new message prompt message being configured to prompt all members in the group that a new unread message exists in the group.

The read request forwarding module 222 is configured to receive a read request for reading the new message which is initiated by the terminal of the second member in the group according to the new message prompt message on a group chat interface and forward the read request to the terminal of the first member.

The message forwarding module 223 is configured to receive a message sent from the terminal of the first member after it is determined whether to allow the terminal of the second member to display the new message and forward the message to the terminal of the second member.

Referring to Fig. 12, in the present embodiment, optionally, the message forwarding module 223 may include: a first forwarding submodule 223a or a second forwarding submodule 223b.

The first forwarding submodule 223a is configured to receive the new message sent from the terminal of the first member after it is determined to allow the terminal of the second member to display the new message and forward the new message to the terminal of the second member.

The second forwarding submodule 223b is configured to receive a rejection message sent from the terminal of the first member after it is determined to disallow the terminal of the second member to display the new message and forward the rejection message to the terminal of the second member.

Referring to Fig. 13, in the present embodiment, optionally, the message prompt module 221 may include:
a message prompt submodule 221a, configured to receive a control message in a preset format sent from the terminal of the first member in the group and send the control message as a new message prompt message to a current group chat interface of each member in the group except the first member, the new message prompt message being configured to prompt all members in the group that a new unread message exists in the group.

With regard to the device in the above embodiment, detailed description of specific modes for conducting operation of modules has been made in the embodiment related to the method, no detailed illustration will be made herein.

By achieving a selective group chat in a group, the foregoing device provided in present embodiment may accurately control the read permission of each member in the group and achieve group chatting with partial members without newly establishing a group or a topic, thus guaranteeing privacy and security of messages, greatly reducing operation complexity, increasing enjoyment of group chat, and improving the active degree of group chat and user experience.

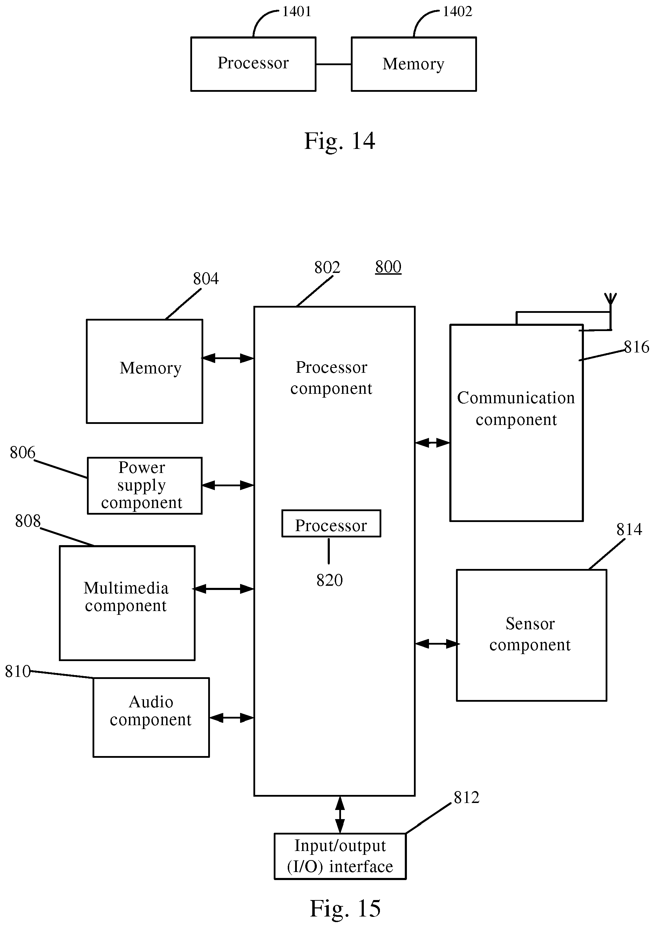

Fig. 14 is a block diagram showing a device for instant messaging according to another exemplary embodiment. Referring to Fig. 14, the device includes a processor 1401 and a memory 1402 configured to store instructions executable by the processor;
wherein, the processor 1401 is configured to:
send a new message prompt message in a group when a user sends a new message in the group, the new message prompt message being configured to prompt all members in the group that a new unread message exists in the group;
receive a read request configured to request reading of the new message sent from a terminal of any member in the group, the read request being initiated by the member by means of the terminal according to the new message prompt message on a group chat interface; and
choose (or screen) the read request according to a predefined rule so as to determine whether to allow the terminal of the member to display the new message.

Fig. 15 is a block diagram of a device 800 for instant messaging according to another exemplary embodiment. For example, the device 800 may be a mobile telephone, a computer, a digital broadcasting terminal, a message transceiver device, a games console, a tablet device, a medical device, a fitness facility, a PDA (personal digital assistant) and the like.

Referring to Fig. 15, the device 800 may include one or more components as below: a processor component 802, a memory 804, a power supply component 806, a multimedia component 808, an audio component 810, an input/output (I/O) interface 812, a sensor component 814 and a communication component 816.

The processor module 802 usually controls the overall operation of the device 800, for example, display, telephone call, data communication, and operation associated with camera operation and record operation. The processor component 802 may include one or more processors 820 for executing instructions so as to complete steps of the above method in part or in whole. In addition, the processor component 802 may include one or more modules for the convenience of interaction between the processor component 802 and other components. For example, the processor component 802 may include a multimedia module for the convenience of interaction between the multimedia component 808 and the processor component 802.

The memory 804 is configured to store data of different types so as to support the operation of the device 800. Examples of the data include instructions of any application program or method, contact data, phonebook data, message, picture and video, etc., which are operated on the device 800. The memory 804 may be realized by volatile or non-volatile memory device of any type or combination thereof, for example, static random access memory (SRAM), electrically erasable programmable read-only memory (EEPROM), erasable programmable read only memory (EPROM), programmable read-only memory (PROM), read-only memory (ROM), magnetic memory, flash memory, magnetic disk or optical disk.

The power supply component 806 provides power for components of the device 800. The power supply component 806 may include a power management system, one or more power supplies, and other components associated with generation, management and power distribution of the device 800.

The multimedia component 808 includes a screen between the device 800 and a user and for providing an output interface. In some embodiments, the screen may include an LCD (Liquid Crystal Display) and a touch panel (TP). If the screen includes a touch panel, the screen may be realized as a touch screen for receiving input signal from users. The touch panel includes one or more touch sensors for sensing gestures on the touch panel, for example, touching and sliding, etc. The touch sensor not only can sensor trip boundary of touching or sliding, but also can detect the duration and pressure related to the touching or sliding operation. In some embodiments, the multimedia component 808 includes a front-facing camera and/or a rear-facing camera. When the device 800 is under an operation mode, for example, capture mode or video mode, the front-facing camera and/or the rear-facing camera may receive external multimedia data. Each front-facing camera and rear-facing camera may be a fixed optical lens system or have focal length and optical zoom capacity.

The audio component 810 is configured to output and/or input audio signal. For example, the audio component 810 includes a microphone (MIC); when the device 800 is under an operation mode such as call mode, record mode and speech recognition mode, the microphone is configured to receive external audio signal. The audio signal received may be further stored in the memory 804 or sent out by the communication component 816. In some embodiments, the audio component 810 also includes a loudspeaker for outputting audio signal.

The I/O interface 812 provides interface for the processor component 802 and peripheral interface modules, the peripheral interface modules may be a keyboard, a click wheel and buttons, etc. These buttons may include but not limited to: home button, volume button, start button and locking button.

The sensor component 814 includes one or more sensors for providing the device 800 with state evaluation from all aspects. For example, the sensor component 814 may detect the on/off state of the device 800, relative positioning of components, for example, the components are the displayer and keypads of the device 800; the sensor component 814 also may detect the position change of the device 800 or a component thereof, the presence or absence of users' touch on the device 800, the direction or acceleration/deceleration of the device 800, and temperature variation of the device 800. The sensor component 814 may also include a proximity detector, which is configured to detect the presence of nearby objects in case of no physical touch. The sensor component 814 may also include an optical sensor, for example, CMOS or CCD image sensor for imaging. In some embodiments, the sensor component 814 may also include an acceleration sensor, a gyro sensor, a magnetic sensor, a pressure sensor, or a temperature sensor.

The communication component 816 is configured to facilitate wired communication or wireless communication between the device 800 and other equipment. The device 800 is available for access to wireless network based on communication standards, for example, WiFi, 2G or 3G, or combination thereof. In an exemplary embodiment, the communication component 816 receives by means of a broadcast channel the broadcast signal or broadcast-related information from external broadcast management systems. In an exemplary embodiment, the communication component 816 also includes a near field communication (NFC) module for promoting short-range communication. For example, the NFC module may be realized on the basis of Radio Frequency Identification (RFID) Technology, Infrared Data Association (IrDA) Technology, Ultra-wide Bandwidth (UWB) Technology, Bluetooth (BT) Technology and other technologies.

In exemplary embodiments, the device 800 may be realized by one or more application specific integrated circuits (ASIC), digital signal processors (DSP), digital signal processing equipment (DSPD), programmable logic devices (PLD), field programmable gate arrays (FPGA), controllers, microcontrollers, microprocessors or other electronic components, configured to execute the above methods.

In exemplary embodiments, a non-transitory computer-readable storage medium including instructions is also provided, for example, a memory 804 including instructions, above instructions may be executed by the processors 820 of the device 800 so as to achieve the above methods. For example, the non-transitory computer-readable storage medium may be ROM, random access memory (RAM), CD-ROM, magnetic tape, floppy disk and optical data storage device, etc.

There is provided a non-transitory computer-readable storage medium, wherein instructions in the storage medium are executed by the processor of the mobile terminal so that the mobile terminal may execute a method for instant messaging, and the method includes:
sending a new message prompt message within a group when a user sends a new message in the group, the new message prompt message being configured to prompt all members in the group that a new unread message exists in the group;
receiving a read request configured to request reading of the new message sent from a terminal of any member in the group, the read request being initiated by the member by means of the terminal according to the new message prompt message on a group chat interface; and
choosing (or screening) the read request according to a predefined rule so as to determine whether to allow the terminal of the member to display the new message.

Optionally, the step of choosing the read request according to a predefined rule so as to determine whether to allow the terminal of the member to display the new message includes:
determining whether to allow the terminal of the member to display the new message according to a locally choosing (or local screen);
sending the new message to the terminal of the member when it is determined to allow the terminal of the member to display the new message; and
sending a rejection message to the terminal of the member when it is determined to disallow the terminal of the member to display the new message.

Optionally, the step of determining whether to allow the terminal of the member to display the new message according to a locally choosing includes:
inquiring whether the user allows the terminal of the member to display the new message; or searching a preset whitelist or blacklist to determine whether to allow the terminal of the member to display the new message.

Optionally, the step of sending a new message prompt message in a group includes:
sending a control message in a preset format within a group, the control message being configured to instruct a server to send a new message prompt message to a current group chat interface of each member in the group except the user.

By achieving a selective group chat in a group, the foregoing non-transitory computer-readable storage medium provided in the present embodiment may accurately control the read permission of each member in the group and achieve group chatting with partial members without newly establishing a group or a topic, thus guaranteeing privacy and security of messages, greatly reducing operation complexity, increasing enjoyment of group chat, and improving the active degree of group chat and user experience.

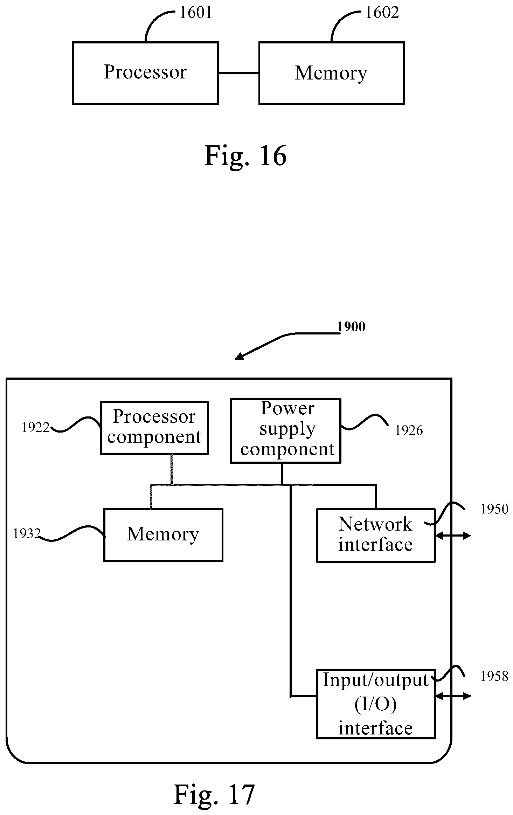

Fig. 16 is a block diagram showing a device for instant messaging according to another exemplary embodiment. Referring to Fig. 16, the device includes a processor 1601 and a memory 1602 configured to store instructions executable by the processor;
wherein, the processor 1601 is configured to:
receive a new message prompt message sent from a terminal of a first member in a group and forward the new message prompt message to the group, the new message prompt message being configured to prompt all members in the group that a new unread message exists in the group;
receive a read request for reading the new message which is initiated by a terminal of a second member in the group according to the new message prompt message on a group chat interface and forward the read request to the terminal of the first member; and
receive a message sent from the terminal of the first member after it is determined whether to allow the terminal of the second member to display the new message and forward the message to the terminal of the second member.

Fig. 17 is a block diagram of a device 1900 for instant messaging according to another exemplary embodiment. For example, the device 1900 may be provided as a server. Referring to Fig. 17, the device 1900 includes a processor component 1922 which includes one or more processors, and memory resource represented by the memory 1932 configured to store instructions, for example, application program, executable by the processor component 1922. The application program stored in the memory 1932 may include one or more modules each of which is corresponding to a set of instructions. In addition, the processor component 1922 is configured to execute instructions so as to execute the foregoing method.

The device 1900 may also include a power supply component 1926 configured to execute the power management of the device 1900, a wired or wireless network interface 1950 configured to connect the device 1900 to the network, and an input/output (I/O) interface 1958. The device 1900 can operate an operating system based on and stored in the memory 1932, for example, Windows ServerTM, Mac OS XTM, UnixTM, LinuxTM, FreeBSDTM or other similar operating systems.

By achieving a selective group chat in a group, the foregoing device provided in the present embodiment may accurately control the read permission of each member in the group and achieve group chatting with partial members without newly establishing a group or a topic, thus guaranteeing privacy and security of messages, greatly reducing operation complexity, increasing enjoyment of group chat, and improving the active degree of group chat and user experience.

## Claims

1. A method for instant messaging, applied to a terminal, comprising:
sending (S21, S31) a new message prompt message in a group when a user sends a new message in the group, the new message prompt message being configured to prompt all members in the group that a new unread message exists in the group; **characterized by**
receiving (S22, S32) a read request configured to request reading of the new message sent from a second terminal of a member in the group, the read request being initiated by the member by means of the second terminal according to the new message prompt message on a group chat interface; and
screening (S23) the read request according to a predefined rule so as to determine whether to allow the second terminal of the member to display the new message.

2. The method of claim 1, wherein the step of screening (S23) the read request according to a predefined rule so as to determine whether to allow the second terminal of the member to display the new message comprises:
determining (S33) whether to allow the second terminal of the member to display the new message according to a local screen;
sending (S34) the new message to the second terminal of the member when it is determined to allow the second terminal of the member to display the new message; and
sending (S35) a rejection message to the second terminal of the member when it is determined to disallow the second terminal of the member to display the new message.

3. The method of claim 2, wherein the step of determining (S33) whether to allow the second terminal of the member to display the new message according to a local screen comprises:
inquiring whether the user allows the second terminal of the member to display the new message; or searching a preset whitelist or blacklist to determine whether to allow the second terminal of the member to display the new message.

4. The method of claim 1, wherein the step of sending (S21, S31) a new message prompt message in a group comprises:
sending (S41) a control message in a preset format in the group, the control message being configured to instruct a server to send a new message prompt message to a current group chat interface of each member in the group except the user.

5. A method for instant messaging, applied to a server, comprising:
receiving (S61, S71) a new message prompt message sent from a terminal of a first member in a group, forwarding the new message prompt message to the group, the new message prompt message being configured to prompt all members in the group that a new unread message exists in the group; **characterized by**
receiving (S62, S72) a read request for reading the new message which is initiated by a terminal of a second member in the group according to the new message prompt message on a group chat interface and forwarding the read request to the terminal of the first member; and
receiving (S63, S73) a message sent from the terminal of the first member after it is determined at the terminal of the first member whether to allow the terminal of the second member to display the new message and forwarding the message to the terminal of the second member.

6. The method of claim 5, wherein the step of receiving (S63, S73) a message sent from the terminal of the first member after it is determined whether to allow a terminal of the second member to display the new message and forwarding the message to the terminal of the second member comprises:
receiving (S63) the new message sent from the terminal of the first member after it is determined to allow the terminal of the second member to display the new message and forwarding the new message to the terminal of the second member; or
receiving (S63) a rejection message sent from the terminal of the first member after it is determined to disallow the terminal of the second member to display the new message and forwarding the rejection message to the terminal of the second member.

7. The method of claim 5, wherein the step of receiving (S61, S71) a new message prompt message sent from a terminal of a first member in a group and forwarding the new message prompt message to the group comprises:
receiving (S71) a control message in a preset format sent from a terminal of a first member in the group, and sending the control message as a new message prompt message to a current group chat interface of each member in the group except the first member.

8. A terminal device for instant messaging, comprising:
a message prompt module (121), configured to send a new message prompt message in a group when a user sends a new message in the group, the new message prompt message being configured to prompt all members in the group that a new unread message exists in the group; **characterized in that** the device further comprises:
a read request receiving module (122), configured to receive a read request configured to request reading of the new message sent from a second terminal of a member in the group, the read request being initiated by the member by means of the second terminal according to the new message prompt message on a group chat interface; and
a determination module (123), configured to screen the read request according to a predefined rule so as to determine whether to allow the second terminal of the member to display the new message.

9. The device of claim 8, wherein the determination module (123) comprises:
a determination submodule (123a), configured to determine whether to allow the second terminal of the member to display the new message according to a local screen;
a first sending submodule (123b), configured to send the new message to the second terminal of the member when the determination submodule determines to allow the second terminal of the member to display the new message; and
a second sending submodule (123c), configured to send a rejection message to the second terminal of the member when the determination submodule determines to disallow the second terminal of the member to display the new message.

10. The device of claim 9, wherein the determination submodule (123a) is configured to:
inquire whether the user allows the second terminal of the member to display the new message; or search a preset whitelist or blacklist to determine whether to allow the second terminal of the member to display the new message.

11. The device of claim 8, wherein the message prompt module (121) comprises:
a message prompt submodule (121a), configured to send a control message in a preset format in the group when the user sends a new message in the group, the control message being configured to instruct a server to send a new message prompt message to a current group chat interface of each member in the group except the user, and the new message prompt message being configured to prompt all members in the group that a new unread message exists in the group.

12. A server device for instant messaging, comprising:
a message prompt module (221), configured to receive a new message prompt message sent from a terminal of a first member in a group and forward the new message prompt message to the group, the new message prompt message being configured to prompt all members in the group that a new unread message exists in the group; **characterized in that** the device further comprises:
a read request forwarding module (222), configured to receive a read request for reading the new message which is initiated by a terminal of a second member in the group according to the new message prompt message on a group chat interface and forward the read request to the terminal of the first member; and
a message forwarding module (223), configured to receive a message sent from the terminal of the first member after it is determined at the terminal of the first member whether to allow the terminal of the second member to display the new message and forward the message to the terminal of the second member.

13. The device of claim 12, wherein the message forwarding module (223) comprises:
a first forwarding submodule (223a), configured to receive the new message sent from the terminal of the first member after it is determined to allow the terminal of the second member to display the new message and forward the new message to the terminal of the second member; or
a second forwarding submodule (223b), configured to receive a rejection message sent from the terminal of the first member after it is determined to disallow the terminal of the second member to display the new message and forward the rejection message to the terminal of the second member.

14. The device of claim 12, wherein the message prompt module comprises:
a message prompt submodule (221a), configured to receive a control message in a preset format sent from a terminal of a first member in the group and send the control message as a new message prompt message to a current group chat interface of each member in the group except the first member, the new message prompt message being configured to prompt all members in the group that a new unread message exists in the group.

15. A computer program product stored on a computer usable medium, comprising computer-readable program means for causing a processor to implement the method according to any one of claims 1 to 7.

## Patentansprüche

1. Sofortnachrichtenverfahren, angewandt auf ein Endgerät, das Folgendes beinhaltet:
Senden (S21, S31) einer Neue-Nachricht-Prompt-Nachricht in einer Gruppe, wenn ein Benutzer eine neue Nachricht in der Gruppe sendet, wobei die Neue-Nachricht-Prompt-Nachricht so konfiguriert ist, dass sie allen Mitgliedern in der Gruppe mitteilt, dass eine neue ungelesene Nachricht in der Gruppe existiert; **gekennzeichnet durch**
Empfangen (S22, S32) einer Leseanforderung, konfiguriert zum Anfordern des Lesens der neuen Nachricht, die von einem zweiten Endgerät eines Mitglieds der Gruppe gesendet wurde, wobei die Leseanforderung von dem Mitglied mittels des zweiten Endgeräts gemäß der Neue-Nachricht-Prompt-Nachricht auf einer Gruppenchat-Schnittstelle initiiert wird; und
Prüfen (S23) der Leseanforderung gemäß einer vordefinierten Regel, um zu bestimmen, ob zugelassen werden soll, dass das zweite Endgerät des Mitglieds die neue Nachricht anzeigt.

2. Verfahren nach Anspruch 1, wobei der Schritt des Prüfens (S23) der Leseanforderung gemäß einer vordefinierten Regel, um zu bestimmen, ob zugelassen werden soll, dass das Endgerät des Mitglieds die neue Nachricht anzeigt, Folgendes beinhaltet:
Bestimmen (S33), ob zugelassen werden soll, dass das Endgerät des Mitglieds die neue Nachricht anzeigen soll, gemäß einer lokalen Prüfung;
Senden (S34) der neuen Nachricht zum Endgerät des Mitglieds, wenn bestimmt wird, dass zugelassen werden soll, dass das Endgerät des Mitglieds die neue Nachricht anzeigt; und
Senden (S35) einer Rückweisungsnachricht zum Endgerät des Mitglieds, wenn bestimmt wird, dass nicht zugelassen werden soll, dass das Endgerät des Mitglieds die neue Nachricht anzeigt.

3. Verfahren nach Anspruch 2, wobei der Schritt des Bestimmens (S33) gemäß einer lokalen Prüfung, ob zugelassen werden soll, dass das Endgerät des Mitglieds die neue Nachricht anzeigt, Folgendes beinhaltet:
Anfragen, ob es der Benutzer zulässt, dass das Endgerät des Mitglieds die neue Nachricht anzeigt; oder Durchsuchen einer voreingestellten Whitelist oder Blacklist, um zu bestimmen, ob zugelassen werden soll, dass das Endgerät des Mitglieds die neue Nachricht anzeigt.

4. Verfahren nach Anspruch 1, wobei der Schritt des Sendens (S21, S31) einer Neue-Nachricht-Prompt-Nachricht in einer Gruppe Folgendes beinhaltet:
Senden (S41) einer Steuernachricht in einem voreingestellten Format in der Gruppe, wobei die Steuernachricht zum Anweisen eines Servers konfiguriert ist, eine Neue-Nachricht-Prompt-Nachricht zu einer aktuellen Gruppenchat-Schnittstelle jedes Mitglieds in der Gruppe mit Ausnahme des Benutzers zu senden.

5. Sofortnachrichtenverfahren, angewandt auf einen Server, das Folgendes beinhaltet:
Empfangen (S61, S71) einer Neue-Nachricht-Prompt-Nachricht, die von einem Endgerät eines ersten Mitglieds in einer Gruppe gesendet wurde, Weiterleiten der Neue-Nachricht-Prompt-Nachricht zu der Gruppe, wobei die Neue-Nachricht-Prompt-Nachricht so konfiguriert ist, dass sie allen Mitgliedern in der Gruppe mitteilt, dass eine neue ungelesene Nachricht in der Gruppe existiert; **gekennzeichnet durch**
Empfangen (S62, S72) einer Leseanforderung zum Lesen der neuen Nachricht, die von einem Endgerät eines zweiten Mitglieds in der Gruppe gemäß der Neue-Nachricht-Prompt-Nachricht auf einer Gruppenchat-Schnittstelle initiiert wurde, und Weiterleiten der Leseanforderung zum Endgerät des ersten Mitglieds; und
Empfangen (S63, S73) einer Nachricht, die von dem Endgerät des ersten Mitglieds gesendet wurde, wenn am Endgerät des ersten Mitglieds bestimmt wurde, ob zugelassen werden soll, dass das Endgerät des zweiten Mitglieds die neue Nachricht anzeigt, und Weiterleiten der Nachricht zum Endgerät des zweiten Mitglieds.

6. Verfahren nach Anspruch 5, wobei der Schritt des Empfangens (S63, S73) einer Nachricht, die vom Endgerät des ersten Mitglieds gesendet wurde, nachdem bestimmt wurde, dass zugelassen werden soll, dass ein Endgerät des zweiten Mitglieds die neue Nachricht anzeigt, und des Weiterleitens der Nachricht zum Endgerät des zweiten Mitglieds Folgendes beinhaltet:
Empfangen (S63) der neuen Nachricht, die vom Endgerät des ersten Mitglieds gesendet wurde, nachdem bestimmt wurde, dass zugelassen werden soll, dass das Endgerät des zweiten Mitglieds die neue Nachricht anzeigt, und Weiterleiten der neuen Nachricht zum Endgerät des zweiten Mitglieds; oder
Empfangen (S63) einer Rückweisungsnachricht, die vom Endgerät des ersten Mitglieds gesendet wurde, nachdem bestimmt wurde, dass nicht zugelassen werden soll, dass das Endgerät des zweiten Mitglieds die neue Nachricht anzeigt, und Weiterleiten der Rückweisungsnachricht zum Endgerät des zweiten Mitglieds.

7. Verfahren nach Anspruch 5, wobei der Schritt des Empfangens (S61, S71) einer Neue-Nachricht-Prompt-Nachricht, die von einem Endgerät eines ersten Mitglieds in einer Gruppe gesendet wurde, und des Weiterleitens der Neue-Nachricht-Prompt-Nachricht zu der Gruppe Folgendes beinhaltet:
Empfangen (S71) einer Steuernachricht in einem voreingestellten Format, die von einem Endgerät eines ersten Mitglieds in der Gruppe gesendet wurde, und Senden der Steuernachricht als eine Neue-Nachricht-Prompt-Nachricht zu einer aktuellen Gruppenchat-Schnittstelle jedes Mitglieds in der Gruppe mit Ausnahme des ersten Mitglieds.

8. Endgerät für Sofortnachrichtendienste, das Folgendes umfasst:
ein Nachrichtenprompt-Modul (121), konfiguriert zum Senden einer Neue-Nachricht-Prompt-Nachricht in einer Gruppe, wenn ein Benutzer eine neue Nachricht in der Gruppe sendet, wobei die Neue-Nachricht-Prompt-Nachricht konfiguriert ist, um allen Mitgliedern der Gruppe mitzuteilen, dass eine neue ungelesene Nachricht in der Gruppe existiert; **dadurch gekennzeichnet, dass** das Gerät ferner Folgendes umfasst:
ein Leseanforderungsempfangsmodul (122), konfiguriert zum Empfangen einer Leseanforderung, konfiguriert zum Anfordern des Lesens der neuen Nachricht, die von einem zweiten Endgerät eines Mitglieds der Gruppe gesendet wurde, wobei die Leseanforderung von dem Mitglied mittels des zweiten Endgeräts gemäß der Neue-Nachricht-Prompt-Nachricht auf einer Gruppenchat-Schnittstelle initiiert wird; und
ein Bestimmungsmodul (123), konfiguriert zum Prüfen der Leseanforderung gemäß einer vordefinierten Regel, um zu bestimmen, ob zugelassen werden soll, dass das zweite Endgerät des Mitglieds die neue Nachricht anzeigt.

9. Gerät nach Anspruch 8, wobei das Bestimmungsmodul (123) Folgendes umfasst:
ein Bestimmungssubmodul (123a), konfiguriert zum Bestimmen, ob zugelassen werden soll, dass das Endgerät des Mitglieds die neue Nachricht anzeigt, gemäß einer lokalen Prüfung;
ein erstes Sendesubmodul (123b), konfiguriert zum Senden der neuen Nachricht zum Endgerät des Mitglieds, wenn das Bestimmungssubmodul bestimmt, dass zugelassen werden soll, dass das Endgerät des Mitglieds die neue Nachricht anzeigt; und
ein zweites Sendesubmodul (123c), konfiguriert zum Senden einer Rückweisungsnachricht zum Endgerät des Mitglieds, wenn das Bestimmungssubmodul bestimmt, dass nicht zugelassen werden soll, dass das Endgerät des Mitglieds die neue Nachricht anzeigt.

10. Gerät nach Anspruch 9, wobei das Bestimmungssubmodul (123a) konfiguriert ist zum:
Anfragen, ob es der Benutzer zulässt, dass das Endgerät des Mitglieds die neue Nachricht anzeigt; oder Durchsuchen einer voreingestellten Whitelist oder Blacklist, um zu bestimmen, ob zugelassen werden soll, dass das Endgerät des Mitglieds die neue Nachricht anzeigt.

11. Gerät nach Anspruch 8, wobei das Nachrichtenprompt-Modul (121) Folgendes umfasst:
ein Nachrichtenprompt-Submodul (121a), konfiguriert zum Senden einer Steuernachricht in einem voreingestellten Format in der Gruppe, wenn der Benutzer eine neue Nachricht in der Gruppe sendet, wobei die Steuernachricht zum Anweisen eines Servers konfiguriert ist, eine Neue-Nachricht-Prompt-Nachricht zu einer aktuellen Gruppenchat-Schnittstelle jedes Mitglieds der Gruppe mit Ausnahme des Benutzers zu senden, und wobei die Neue-Nachricht-Prompt-Nachricht konfiguriert ist, um allen Mitgliedern der Gruppe mitzuteilen, dass eine neue ungelesene Nachricht in der Gruppe existiert.

12. Server-Gerät für Sofortnachrichtendienste, das Folgendes umfasst:
ein Nachrichtenprompt-Modul (221), konfiguriert zum Empfangen einer Neue-Nachricht-Prompt-Nachricht, die von einem Endgerät eines ersten Mitglieds einer Gruppe gesendet wurde, und zum Weiterleiten der Neue-Nachricht-Prompt-Nachricht zu der Gruppe, wobei die Neue-Nachricht-Prompt-Nachricht konfiguriert ist, um allen Mitgliedern der Gruppe mitzuteilen, dass eine neue ungelesene Nachricht in der Gruppe existiert; **dadurch gekennzeichnet, dass** das Gerät ferner Folgendes umfasst:
ein Leseanforderungsweiterleitungsmodul (222), konfiguriert zum Empfangen einer Leseanforderung zum Lesen der neuen Nachricht, die von einem Endgerät eines zweiten Mitglieds einer Gruppe gemäß der Neue-Nachricht-Prompt-Nachricht auf einer Gruppenchat-Schnittstelle initiiert wird, und zum Weiterleiten der Leseanforderung zum Endgerät des ersten Mitglieds; und
ein Nachrichtenweiterleitungsmodul (223), konfiguriert zum Empfangen einer Nachricht, die vom Endgerät des ersten Mitglieds gesendet wurde, nachdem am Endgerät des ersten Mitglieds bestimmt wurde, ob zugelassen werden soll, dass das Endgerät des zweiten Mitglieds die neue Nachricht anzeigt, und zum Weiterleiten der Nachricht zum Endgerät des zweiten Mitglieds.

13. Gerät nach Anspruch 12, wobei das Nachrichtenweiterleitungsmodul (223) Folgendes umfasst:
ein erstes Weiterleitungssubmodul (223a), konfiguriert zum Empfangen der neuen Nachricht, die vom Endgerät des ersten Mitglieds gesendet wurde, nachdem bestimmt wurde, dass zugelassen werden soll, dass das Endgerät des zweiten Mitglieds die neue Nachricht anzeigt, und zum Weiterleiten der neuen Nachricht zum Endgerät des zweiten Mitglieds; oder
ein zweites Weiterleitungssubmodul (223b), konfiguriert zum Empfangen einer Rückweisungsnachricht, die vom Endgerät des ersten Mitglieds gesendet wurde, nachdem bestimmt wurde, dass nicht zugelassen werden soll, dass das Endgerät des zweiten Mitglieds die neue Nachricht anzeigt, und zum Weiterleiten der Rückweisungsnachricht zum Endgerät des zweiten Mitglieds.

14. Gerät nach Anspruch 12, wobei das Nachrichtenprompt-Modul Folgendes umfasst:
ein Nachrichtenprompt-Submodul (221a), konfiguriert zum Empfangen einer Steuernachricht in einem voreingestellten Format, die von einem Endgerät eines ersten Mitglieds in der Gruppe gesendet wird, und Senden der Steuernachricht als eine Neue-Nachricht-Prompt-Nachricht zu einer aktuellen Gruppenchat-Schnittstelle jedes Mitglieds der Gruppe mit Ausnahme des ersten Mitglieds, wobei die Neue-Nachricht-Prompt-Nachricht konfiguriert ist, um allen Mitgliedern der Gruppe mitzuteilen, dass eine neue ungelesene Nachricht in der Gruppe existiert.

15. Computerprogrammprodukt, das auf einem von einem Computer benutzbaren Medium gespeichert ist, umfassend computerlesbare Programmmittel, um zu bewirken, dass ein Prozessor das Verfahren nach einem der Ansprüche 1-7 ausführt.

## Revendications

1. Procédé de messagerie instantanée, appliqué à un terminal, comprenant :
envoyer (S21, S31) un message de notification de nouveau message dans un groupe lorsqu'un utilisateur envoie un nouveau message dans le groupe, le message de notification de nouveau message étant configuré pour notifier à tous les membres dans le groupe qu'un nouveau message non lu existe dans le groupe ; caractérisé en
recevant (S22, S32) une requête de lecture configurée pour demander la lecture du nouveau message envoyé d'un deuxième terminal d'un membre dans le groupe, la requête de lecture étant lancée par le membre au moyen du deuxième terminal conformément au message de notification de nouveau message sur une interface de bavardage de groupe ; et en
filtrant (S23) la requête de lecture conformément à une règle prédéfinie de manière à déterminer si autoriser le deuxième terminal du membre à afficher le nouveau message.

2. Procédé selon la revendication 1, dans lequel l'étape consistant à filtrer (S23) la requête de lecture conformément à une règle prédéfinie de manière à déterminer si autoriser le deuxième terminal du membre à afficher le nouveau message, comprend :
déterminer (S33) si autoriser le deuxième terminal du membre à afficher le nouveau message conformément à un filtre local ;
envoyer (S34) le nouveau message au deuxième terminal du membre lorsqu'il est déterminé d'autoriser le deuxième terminal du membre à afficher le nouveau message ; et
envoyer (S35) un message de rejet au deuxième terminal du membre lorsqu'il est déterminé d'interdire au deuxième terminal du membre d'afficher le nouveau message.

3. Procédé selon la revendication 2, dans lequel l'étape consistant à déterminer (S33) si autoriser le deuxième terminal du membre à afficher le nouveau message conformément à un filtre local, comprend :
interroger pour savoir si l'utilisateur autorise le deuxième terminal du membre à afficher le nouveau message ; ou bien consulter une liste blanche ou une liste noire prédéfinie pour déterminer si autoriser le deuxième terminal du membre à afficher le nouveau message.

4. Procédé selon la revendication 1, dans lequel l'étape consistant à envoyer (S21, S31) un message de notification de nouveau message dans un groupe comprend :
envoyer (S41) un message de commande dans un format prédéfini dans le groupe, le message de commande étant configuré pour instruire un serveur d'envoyer un message de notification de nouveau message à une interface de bavardage de groupe courant de chaque membre dans le groupe à l'exception de l'utilisateur.

5. Procédé de messagerie instantanée, appliqué à un terminal, comprenant :
recevoir (S61, S71) un message de notification de nouveau message envoyé d'un terminal d'un premier membre dans un groupe, transmettre le message de notification de nouveau message au groupe, le message de notification de nouveau message étant configuré pour notifier à tous les membres dans le groupe qu'un nouveau message non lu existe dans le groupe ; caractérisé en :
recevant (S62, S72) une requête de lecture pour lire le nouveau message qui est lancée par un terminal d'un deuxième membre dans le groupe conformément au message de notification de nouveau message sur une interface de bavardage de groupe et en transmettant la requête de lecture au terminal du premier membre, et
en recevant (S63, S73) un message envoyé du terminal du premier membre après qu'il a été déterminé au terminal du premier membre si autoriser le terminal du deuxième membre à afficher le nouveau message et en transmettant le message au terminal du deuxième membre.

6. Procédé selon la revendication 5, dans lequel l'étape consistant à recevoir (S63, S73) un message envoyé du terminal du premier membre après qu'il a été déterminé si autoriser un terminal du deuxième membre à afficher le nouveau message et à transmettre le message au terminal du deuxième membre comprend :
recevoir (S63) le nouveau message envoyé du terminal du premier membre après qu'il a été déterminé d'autoriser le terminal du deuxième membre à afficher le nouveau message et transmettre le nouveau message au terminal du deuxième membre ; ou
recevoir (S63) un message de rejet envoyé du terminal du premier membre après qu'il a été déterminé d'interdire le terminal du deuxième membre d'afficher le nouveau message et transmettre le message de rejet au terminal du deuxième membre.

7. Procédé selon la revendication 5, dans lequel l'étape consistant à recevoir (S61, S71) un message de notification de nouveau message envoyé d'un terminal d'un premier membre dans un groupe et à transmettre le message de notification de nouveau message au groupe comprend :
recevoir (S71) un message de commande dans un format prédéfini envoyé d'un terminal d'un premier membre dans le groupe, et envoyer le message de commande comme un message de notification de nouveau message à une interface de bavardage de groupe courant de chaque membre dans le groupe à l'exception du premier membre.

8. Dispositif terminal de messagerie instantanée, comprenant :
un module de notification de message (121), configuré pour envoyer un message de notification de nouveau message dans un groupe lorsqu'un utilisateur envoie un nouveau message dans le groupe, le message de notification de nouveau message étant configuré pour notifier à tous les membres dans le groupe qu'un nouveau message non lu existe dans le groupe ; **caractérisé en ce que** le dispositif comprend en outre :
un module de réception de requête de lecture (122), configuré pour recevoir une requête de lecture configurée pour demander la lecture du nouveau message envoyé d'un deuxième terminal d'un membre dans le groupe, la requête de lecture étant lancée par le membre au moyen du deuxième terminal conformément au message de notification de nouveau message sur une interface de bavardage de groupe ; et
un module de détermination (123), configuré pour filtrer la requête de lecture conformément à une règle prédéterminée de manière à déterminer si autoriser le deuxième terminal du membre à afficher le nouveau message.

9. Dispositif selon la revendication 8, dans lequel le module de détermination (123) comprend :
un sous-module de détermination (123a), configuré pour déterminer si autoriser le deuxième terminal du membre à afficher le nouveau message conformément à un filtre local ;
un premier sous-module d'envoi (123b), configuré pour envoyer le nouveau message au deuxième terminal du membre lorsque le sous-module de détermination détermine d'autoriser le deuxième terminal du membre à afficher le nouveau message ; et
un deuxième sous-module d'envoi (123c), configuré pour envoyer un message de rejet au deuxième terminal du membre lorsque le sous-module de détermination détermine d'interdire au deuxième terminal du membre d'afficher le nouveau message.

10. Dispositif selon la revendication 9, dans lequel le sous-module de détermination (123a), est configuré pour :
interroger pour savoir si l'utilisateur autorise le deuxième terminal du membre à afficher le nouveau message ; ou consulter une liste blanche ou une liste noire prédéfinie pour déterminer si autoriser le deuxième terminal du membre à afficher le nouveau message.

11. Dispositif selon la revendication 8, dans lequel le module de notification de message (121) comprend :
un sous-module de notification de message (121a), configuré pour envoyer un message de commande dans un format prédéfini dans le groupe lorsque l'utilisateur envoie un nouveau message dans le groupe, le message de commande étant configuré pour instruire un serveur d'envoyer un message de notification de nouveau message à une interface de bavardage de groupe courant de chaque membre dans le groupe à l'exception de l'utilisateur, et le message de notification de nouveau message étant configuré pour notifier à tous les membres dans le groupe qu'un nouveau message non lu existe dans le groupe.

12. Dispositif serveur de messagerie instantanée, comprenant :
un module de notification de message (221), configuré pour recevoir un message de notification de nouveau message envoyé d'un terminal d'un premier membre dans un groupe et transmettre le message de notification de nouveau message au groupe, le message de notification de nouveau message étant configuré pour notifier à tous les membres dans le groupe qu'un nouveau message non lu existe dans le groupe ; **caractérisé en ce que** le dispositif comprend en outre :
un module de transmission de requête de lecture (222), configuré pour recevoir une requête de lecture pour lire le nouveau message qui est lancée par un terminal d'un deuxième membre dans le groupe conformément au message de notification de nouveau message sur une interface de bavardage de groupe et transmettre la requête de lecture au terminal du premier membre ; et
un module de transmission de message (223), configuré pour recevoir un message envoyé du terminal du premier membre après qu'il a été déterminé au terminal du premier membre si autoriser le terminal du deuxième membre à afficher le nouveau message et transmettre le message au terminal du deuxième membre.

13. Dispositif selon la revendication 12, dans lequel le module de transmission de message (223) comprend :
un premier sous-module de transmission (223a), configuré pour recevoir le nouveau message envoyé du terminal du premier membre après qu'il a été déterminé d'autoriser le terminal du deuxième membre à afficher le nouveau message et transmettre le nouveau message au terminal du deuxième membre ; ou
un deuxième sous-module de transmission (223b), configuré pour recevoir un message de rejet envoyé du terminal du premier membre après qu'il a été déterminé d'interdire au terminal du deuxième membre d'afficher le nouveau message et transmettre le message de rejet au terminal du deuxième membre.

14. Dispositif selon la revendication 12, dans lequel le module de notification de message comprend :
un sous-module de notification de message (221a), configuré pour recevoir un message de commande dans un format prédéfini d'un terminal d'un premier membre dans le groupe et d'envoyer le message de commande comme un message de notification de nouveau message à une interface de bavardage de groupe courant de chaque membre dans le groupe à l'exception du premier membre, le message de notification de nouveau message étant configuré pour notifier à tous les membres dans le groupe qu'un nouveau message non lu existe dans le groupe.

15. Produit de programme informatique stocké sur un support utilisable par ordinateur, comprenant des moyens de programmation lisibles par ordinateur pour faire qu'un processeur mette en oeuvre le procédé selon l'une quelconque des revendications 1 à 7.
